# EUROPÄISCHE PATENTSCHRIFT

(11) **EP 0 700 346 B1**
(45) Veröffentlichungstag und Bekanntmachung des Hinweises auf die Patenterteilung: **05.02.1997**
(21) Anmeldenummer: 94918358.6
(22) Anmeldetag: 24.05.1994
(51) Int. Cl.: B62D 5/06

(54) **HYDROLENKUNGSANLAGE**
HYDRAULIC STEERING GEAR
SYSTEME DE DIRECTION HYDRAULIQUE

(30) Priorität: 27.05.1993 DE 4317625
(43) Veröffentlichungstag der Anmeldung: 13.03.1996
(73) Patentinhaber: ZF FRIEDRICHSHAFEN Aktiengesellschaft, 88038 Friedrichshafen (DE)
(72) Erfinder: LANG, Armin, D-73529 Schwäbisch Gmünd (DE); LEUTNER, Wilfried, D-73527 Schwäbisch Gmünd (DE); KNÖDLER, Helmut, D-73547 Lorch (DE)
(86) Internationale Anmeldenummer: EP9401657
(87) Internationale Veröffentlichungsnummer: WO9427855

(56) Entgegenhaltungen:
- DE-A- 3 227 953
- FR-A- 2 520 063
- GB-A- 2 208 376
- PATENT ABSTRACTS OF JAPAN vol. 010, no. 207 (M-500) 19. Juli 1986 & JP,A,61 048 601 (AISIN WARNER LTD) 10. März 1986
- PATENT ABSTRACTS OF JAPAN vol. 008, no. 136 (M-304) 23. Juni 1984 & JP,A,59 034 976 (NISSAN JIDOSHA KK) 25. Februar 1984

## Beschreibung

Die Erfindung betrifft eine Hydrolenkungsanlage mit einer Lenkungseinrichtung und einem Ölbehälter, die über eine Zulaufleitung und eine Rücklaufleitung miteinander in Verbindung stehen, wobei in die Zulaufleitung eine Druckölpumpe integriert ist und wobei ein mit der Rücklaufleitung kommunizierender Ölspeicher und ein in Richtung zum Ölbehälter sich öffnendes Stauventil vorgesehen ist, das zwischen dem Ölbehälter und dem Ölspeicher angeordnet ist.

Eine solche Hydrolenkungsanlage ist zum Beispiel aus der DE-A-3227953 bekannt.

Wenn in Hydrolenkungsanlagen, z. B. solchen von robusten, großen Kraftfahrzeugen, Öl vom Ölbehälter in die Zylinderräume fließt, reicht oft die Druckdifferenz zwischen Rücklaufdruck und Unterdruck im Zylinder nicht aus, um den Zylinderraum schnell genug mit Öl zu füllen. Es entsteht dadurch ein luftleerer Raum.

Insbesondere beim schnellen Umlenken treten deshalb störende Klopfgeräusche auf.

Bei herkömmlichen Umlaufsystemen sorgt der kontinuierliche Ölstrom durch Drosselwiderstände in der Rücklaufleitung oder im Zylinder des Ölbehälters für einen gewissen Rücklaufdruck. Das Öl zum Füllen der Zylinderräume kommt nicht aus dem Ölbehälter, sondern wird von dem durchlaufenden Öl abgezweigt.

Bei Systemen mit geschlossener Mitte (z. B. CC-Lenkung) sind die Verhältnisse anders. Da das Öl nicht dauernd im Umlauf strömt, muß im Nachsaugfall Öl aus dem Ölbehälter zur Lenkung strömen. Wird wegen der Strömungsverluste der Zylinder nicht ausreichend gefüllt, können bei plötzlichem Druckanstieg im Zylinder ebenfalls Klopfgeräusche auftreten.

Der vorliegenden Erfindung liegt daher die Aufgabe zugrunde, eine Hydrolenkungsanlage der eingangs erwähnten Art zu schaffen, die die genannten Nachteile vermeidet, einfach aufgebaut ist und die dynamisch arbeitet.

Erfindungsgemäß wird diese Aufgabe dadurch gelöst, daß der Ölspeicher als Kolbenspeicher mit einem Kolben und mit einer Vorspannung durch eine Feder ausgebildet ist.

Das Stauventil dient dabei der Schaffung eines Druckreservoirs. Dadurch kann das Öl, insbesondere beim schnellen Umlenken bzw. bei plötzlichem Druckanstieg im Zylinder der Lenkungseinrichtung, schneller in die Unterdruckräume des Zylinders der Lenkeinrichtung strömen und verursacht deshalb keinerlei Klopfgeräusche.

Bei Überschreiten des Speichervolumens des erfindungsgemäßen Ölspeichers strömt überschüssiges Öl zum Ölbehälter.

Auf diese Weise wird eine Federvorspannung geschaffen, womit es möglich wird, daß das Öl besser und etwas schneller die Druckräume des Zylinders der Lenkungseinrichtung erreicht. Das Stauventil bewirkt dabei den Aufbau eines Staudruckes im Ölspeicher gegen die Feder.

Außerdem kann bei schnellen Lenkbewegungen der Kolben durch das zum Ölbehälter zurückströmende Öl nur gegen die Federkraft der Feder angehoben werden. Dabei wird das Öl in der Rücklaufleitung unter Druck gesetzt.

Von Vorteil ist es außerdem, wenn das Stauventil in den Ölspeicher integriert ist.

In weiterer Ausbildung der Erfindung kann vorgesehen sein, daß sich nach einem bestimmten Weg des Kolbens des Ölspeichers Öffnungen zum Ölbehälter ergeben.

Dies kann dergestalt realisiert werden, indem z. B. in der zylindrischen Wandung des Kolbenspeichers Bohrungen angeordnet sind, die mit dem im Kolbenspeicher befindlichen Kolben derart zusammenarbeiten, daß erst beim Erreichen eines bestimmten Kolbenweges und eines Druckaufbaues in der Rücklaufleistung, d. h. wenn der Kolbenboden die Bohrungen erreicht, das Öl vom Ölspeicher in den Ölbehälter abströmen kann.

Anstelle von Bohrungen können auch Kanäle, Nuten oder andere Ausnehmungen als Öffnungen dienen.

Der Ölspeicher dient durch diese erfindungsgemäße Ausgestaltung gleichzeitig der Aufspeicherung des Öles und dem Aufbau eines Druckreservoirs.

Der Spalt zwischen dem Kolben und der zylindrischen Wandung des Kolbenspeichers kann sehr klein gehalten sein, so daß das Öl nur langsam und gleichmäßig durch die Öffnungen zum Ölbehälter gelangt.

Ebenfalls eine vorteilhafte Ausgestaltung der Erfindung besteht darin, daß der Raum, in dem die Vorspannfeder für den Kolben angeordnet ist, mit einer Ausgleichsbohrung versehen ist.

Dadurch kann Öl aus dem Ölbehälter in den Ölspeicher bzw. den Federraum als Ausgleich strömen, wenn sich die Feder wieder entspannt.

Von Vorteil ist es, wenn der Raum, in dem die Feder für den Kolben angeordnet ist, durch einen Deckel abgeschlossen ist. Der Deckel ist vorteilhaft aufgeschraubt. Zweckmäßig befindet sich die Ausgleichsbohrungg mittig im Deckel.

Damit entsteht ein einfach aufgebauter Ölspeicher, der leicht auseinanderbaubar ist, falls beispielsweise die Feder oder der Kolben ausgewechselt werden sollen.

Der Ölspeicher kann in vorteilhafter Weise in verschiedenen Varianten in die Rücklaufleitung eingebaut sein.

So ist es möglich, den Ölspeicher direkt in die Rücklaufleitung zu integrieren.

Es ist aber auch möglich, den Ölspeicher in der Lenkungseinrichtung zu installieren.

Außerdem ist es möglich, den Ölspeicher in das Innere des Ölbehälters einzubauen oder auch auf diesen aufzusetzen.

Diese möglichen Einbauweisen richten sich nach den räumlichen Gegebenheiten, die für die Hydrolenkungsanlage zur Verfügung stehen.

In weiterer Ausgestaltung der Erfindung kann vorgesehen sein, daß in den Ölspeicher ein Rückschlagventil eingebaut ist.

Das Rückschlagventil läßt bei Bedarf Öl vom Ölbehälter zur Lenkungseinrichtung strömen. Anstelle des gesonderten Einbaus eines Rückschlagventiles ist es vorteilhaft möglich, daß für die Bildung eines Rückschlagventiles der Boden des Kolbens mit einer Öffnung versehen ist, in die ein mit einer weiteren Feder belastetes Schließglied drückbar ist.

Das Schließglied wird von dieser Feder in die Öffnung mit schwacher Vorspannung gedrückt.

Wenn der Druck in der Lenkungseinrichtung unter den Druck sinkt, der im Ölbehälter herrscht, wird das Schließglied, z. B. ein Ventilkegel, nach unten gedrückt, und das Öl strömt vom Ölbehälter in die Lenkungseinrichtung.

Weiterhin kann vorgesehen sein, daß in den Fällen, in denen der Ölspeicher um 180° gedreht in den Ölbehälter eingebaut bzw. auf diesen aufgesetzt ist, d. h. wenn die Rücklaufleitung von oben in den Ölspeicher mündet und der Deckel des Ölspeichers mit der Ausgleichsöffnung nach unten zeigt, eine Kugel als Schließglied vorhanden ist.

Bei dieser Variante stellt der eigentliche Boden des Kolbens die obere Stirnseite des Bodens dar. Diese obere Stirnseite des Kolbens ist zweckmäßig mit einer mittig angeordneten Öffnung versehen, auf die die Kugel als Schließglied aufgesetzt ist. Die Kugel wirkt dabei mit ihrem Eigengewicht und bildet damit ein sehr einfach aufgebautes Rückschlagventil.

Auf die Feder und den Ventilkegel, die bei der bereits beschriebenen Variante der Bildung eines Rückschlagventiles Verwendung finden, kann hierbei verzichtet werden.

In vorteilhafter Weise kann somit ein sehr einfach aufgebautes und gut wirkendes Schließglied geschaffen werden.

Vorteilhaft ist es außerdem, wenn die Rücklaufleitung vor der Kugel eine Verengung oder ein Rückhalteglied aufweist.

Die Kugel wird damit in ihrer Position gehalten und ihr Nachaußendrücken durch das Rückhalteglied bzw. die Verengung bei Unterdruck vermieden.

Als Rückhalteglied kann in einfacher Weise ein quer durch die Rücklaufleitung sich erstreckender Stift gewählt werden.

Nachfolgend ist ein Ausführungsbeispiel der Erfindung anhand von Zeichnungen prinzipmäßig beschrieben.
Es zeigt:
- Fig. 1: eine Schaltungsanordnung für die wesentlichen Bauteile der erfindungsgemäßen Hydrolenkungsanlage;
- Fig. 2: eine Längsschnittdarstellung der erfindungsgemäßen Hydrolenkungsanlage mit in den Ölbehälter eingebautem Ölspeicher;
- Fig. 3: eine Einzeldarstellung des Ölspeichers im Längsschnitt mit ein Rückschlagventil bildenden Bauteilen und
- Fig. 4: einen Längsschnitt durch einen Ölbehälter mit verändertem Einbau des Ölspeichers.

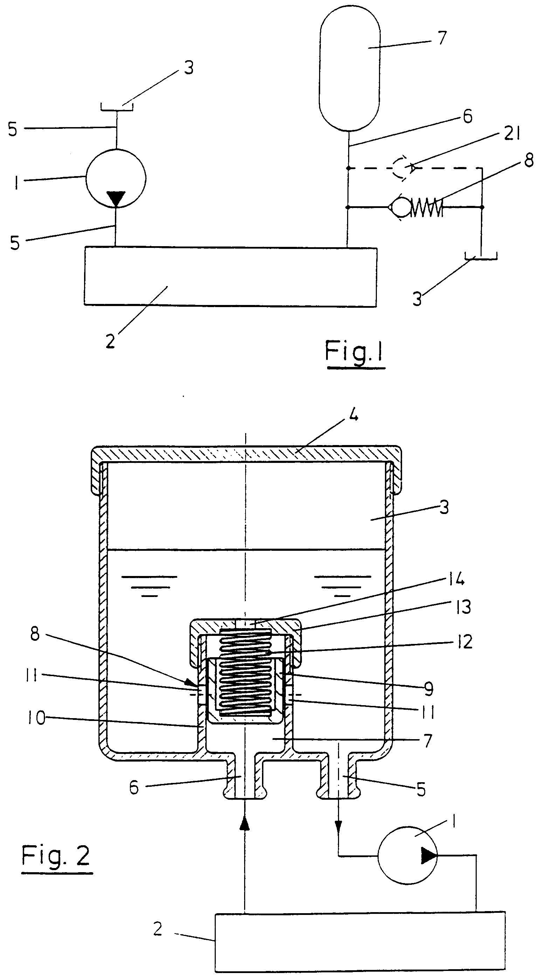

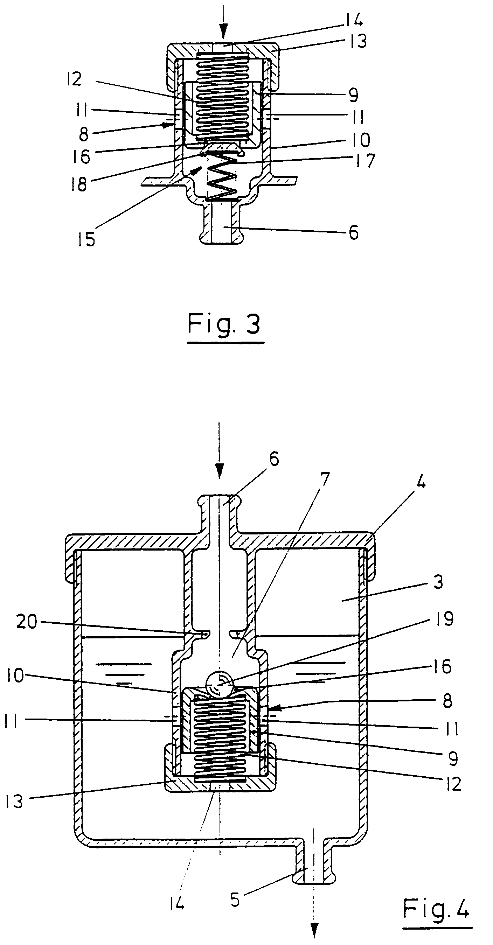

Die Hydrolenkungsanlage (mit geschlossener Mitte) besteht aus einer Druckölpumpe 1, einer Lenkungseinrichtung 2 und einem Ölbehälter 3. Der Ölbehälter 3 ist, wie in Fig. 2 und 4 ersichtlich, mit einem Deckel 4 verschließbar. Zweckmäßig ist er auf den Ölbehälter 3 aufgeschraubt.

Der Ölbehälter 3 steht mit der Lenkungseinrichtung 2 über eine Zulaufleitung 5 für das Ansaugöl und eine Rücklaufleitung 6 für das Rücklauföl in Verbindung. Dazu ist der Ölbehälter 3 mit entsprechenden Anschlußstutzen ausgestattet. Mit der Rücklaufleitung 6 ist ein Ölspeicher 7 kommunizierend verbunden.

Zwischen dem Ölbehälter 3 und dem Ölspeicher 7 wirkt ein Stauventil 8. Es ist in den Fig. 2 bis 4 mit einem Pfeil gekennzeichnet und derart ausgebildet, daß sich ein Kolben 9 im Ölspeicher 7 bewegbar mit geringem Spiel befindet. Der Ölspeicher 7 weist in seiner zylindrischen Wandung 10 diametral gegenüberliegende Öffnungen 11 auf. Beim Erreichen eines bestimmten Kolbenweges kann dadurch Öl vom Ölspeicher 7 zum Ölbehälter 3 abströmen.

Der Kolben 9 ist mit einer Feder 12 vorgespannt. Bei Lenkbewegungen wird der Kolben 9 durch das über die Rücklaufleitung 6 zum Ölbehälter 3 zurückströmende Öl gegen die Federkraft der Feder 12 angehoben und dadurch das Öl in der Rücklaufleitung 6 unter Druck gesetzt.

Der Ölspeicher 7 ist mit einem Deckel 13 verschließbar. Aus den Fig. 2, 3 und 4 ist ersichtlich, daß dieser Deckel 13 mit dem Ölspeicher 7 für eine leichte Montage und Demontage verschraubt ist. Der Deckel 13 ist mittig mit einer Ausgleichsbohrung 14 versehen.

Die Fig. 2 und 4 zeigen, wie der Ölspeicher 7 im Ölbehälter 3 eingebaut ist, um mit der Rücklaufleitung 6 kommunizieren zu können.

Fig. 3 zeigt den Ölspeicher 7, in welchem zusätzlich Bauteile vorhanden sind, die ein in der Fig. 3 mit einem Pfeil gekennzeichnetes Rückschlagventil 15 bilden. Dazu ist der Boden des Kolbens 9 mit einer Öffnung 16 versehen. In diese Öffnung 16 ist ein mit einer Feder 17 belasteter Ventilkegel 18 als Schließglied drückbar.

Eine andere Variante der Bildung des Rückschlagventiles 15 zeigt Fig. 4.

Anstelle der Verwendung der Feder 17 und Ventilkegel 18 bedient man sich hierbei einer Kugel 19 als Schließglied.

Dazu ist eine um 180° gedrehte, d. h. eine umgekehrte Einbaulage, gegenüber jener in Fig. 2 gezeigten Einbaulage des Ölspeichers 7 einschließlich seines Kolbens 9 im Ölbehälter 3 vorgesehen.

Die Kugel 19 wirkt hier mit ihrem Eigengewicht und verschließt somit die Öffnung 16. Die Rücklaufleitung 6 mündet in diesem Falle von oben her in den Ölspeicher 7 ein.

In Fig. 4 ist außerdem eine Verengung 20 der Rücklaufleitung 6, die auch ein Rückhalteglied sein kann, dargestellt. Die Verengung bzw. das Rückhalteglied 20 hält die Kugel 19 beim Auftreten eines Unterdruckes in der Rücklaufleitung 6 und einem daraus resultierenden Abheben der Kugel 19 zum Nachsaugen von Öl aus dem Ölspeicher 7 in die Rücklaufleitung 6 davon ab, in die Rücklaufleitung "zu verschwinden". Diese Engstelle 20 dient als Anschlag für die Kugel 19 in Offenstellung des Rückschlagventils, wobei jedoch noch genügend Freiraum für ein Rücksaugen von Öl aus dem Ölspeicher 7 in die Rücklaufleitung 6 verbleiben muß.

Anstelle der Verengung kann als Rückhalteglied auch ein sich quer durch die Rücklaufleitung 6 erstreckender, nicht in der Figur dargestellter Stift Verwendung finden.

Dieses Rückschlagventil ist in Fig. 1. prinzipmäßig mit dem Bezugszeichen 21 dargestellt.

Die Hydrolenkungsanlage arbeitet wie folgt: Mit Inbetriebsetzung des technischen Systems, welches die Lenkungseinrichtung 2 beinhaltet, wird die Druckölpumpe 1 betätigt, welche die Voraussetzung schafft, das hydraulische Lenksystem wirken zu lassen.

Die Druckölpumpe 1 saugt aus dem drucklosen Ölbehälter 3 Öl an und baut so einen Druck auf, daß das Öl verdichtet wird und über die Zulaufleitung 5 in die Lenkungseinrichtung 2 gelangt. Danach strömt es über die Rücklaufleitung 6 und den Ölspeicher 7 in den Ölbehälter 3. Bei Lenkbewegungen wird der Kolben 9 durch das zum Ölbehälter 3 über das Stauventil 8 strömende Öl gegen die Federkraft der Feder 12 angehoben.

Dabei wird das Öl in der Rücklaufleitung 6 unter Druck gesetzt.

Erreicht der Kolben 9 bzw. der Boden des Kolbens 9 die Öffnungen 11 der zylindrischen Wandung 10 des Ölspeichers 7, wird der Kolben 9 nicht mehr weiter angehoben. Das Öl kann jetzt durch die Öffnungen 11 in den Ölbehälter 3 fließen. Auf diese Weise herrscht im Rücklaufsystem, insbesondere in der Rücklaufleitung 6, ein vorgegebener Druck.

Die Durchmesser der Öffnungen 11 sind so gewählt, daß das Öl langsam und gleichmäßig zum Ölbehälter 3 gelangen kann.

Entsteht ein Unterdruck im Zylinderraum der Lenkungseinrichtung 2 durch (zu) schnelle Lenkbewegungen, so wird Öl aus dem Ölspeicher 7 durch die Feder 12 zur Lenkungseinrichtung 2 zurückgedrückt.

Damit werden luftleere Räume vermieden, die im Extremfall sogar einen sicheren Lenkvorgang behindern können. Außerdem entfallen die Geräuschprobleme.

Da nur kleine Mengen Öl benötigt werden, braucht der Ölspeicher 7 nur ein geringes Volumen aufzuweisen. Ein Volumen von nur ca. 2 bis 6 cm³ hat sich als ausreichend erwiesen.

### Bezugszeichen

- 1: Druckölpumpe
- 2: Lenkungseinrichtung
- 3: Ölbehälter
- 4: Deckel
- 5: Zulaufleitung
- 6: Rücklaufleitung
- 7: Ölspeicher
- 8: Stauventil
- 9: Kolben
- 10: zylindrische Wandung
- 11: Bohrungen
- 12: Feder
- 13: Deckel für Ölspeicher
- 14: Ausgleichsbohrung im Deckel
- 15: Rückschlagventil
- 16: Öffnung im Boden des Deckels
- 17: Feder
- 18: Ventilkegel
- 19: Kugel
- 20: Verengung bzw. Rückhalteglied
- 21: Rückschlagventil

## Patentansprüche

1. Hydrolenkungsanlage mit einer Lenkungseinrichtung (2) und einem Ölbehälter (3), die über eine Zulaufleitung (5) und eine Rücklaufleitung (6) miteinander in Verbindung stehen, wobei in die Zulaufleitung (5) eine Druckölpumpe (1) integriert ist und wobei ein mit der Rücklaufleitung (6) kommunizierender Ölspeicher (7) und ein in Richtung zum Ölbehälter (3) sich öffnendes Stauventil (8) vorgesehen ist und das Stauventil (8) zwischen dem Ölbehälter (3) und dem Ölspeicher (7) angeordnet ist, dadurch **gekennzeichnet,** daß der Ölspeicher (7) als Kolbenspeicher mit einem Kolben (9) und mit einer Vorspannung durch eine Feder (12) ausgebildet ist.

2. Hydrolenkungsanlage nach Anspruch 1, dadurch **gekennzeichnet,** daß das Stauventil (8) in den Ölspeicher (7) integriert ist.

3. Hydrolenkungsanlage nach Anspruch 1 und 2, dadurch **gekennzeichnet,** daß sich nach einem bestimmten Weg des Kolbens (9) des Ölspeichers (7) Öffnungen (11) zum Ölbehälter (3) ergeben.

4. Hydrolenkungsanlage nach Anspruch 1, dadurch **gekennzeichnet,** daß der Raum, in dem die Vorspannfeder (12) für den Kolben (9) angeordnet ist, mit einer Ausgleichsbohrung (14) versehen ist.

5. Hydrolenkungsanlage nach Anspruch 1 und 4, dadurch **gekennzeichnet,** daß der Raum, in dem die Vorspannfeder (12) angeordnet ist, durch einen Deckel (13) abgeschlossen ist, in dem sich die Ausgleichsbohrung (14) befindet.

6. Hydrolenkungsanlage nach Anspruch 1, dadurch **gekennzeichnet,** daß der Ölspeicher (7) direkt in die Rücklaufleitung (6) integriert ist.

7. Hydrolenkungsanlage nach Anspruch 1, dadurch **gekennzeichnet,** daß der Ölspeicher (7) in der Lenkungseinrichtung (2) angeordnet ist.

8. Hydrolenkungsanlage nach Anspruch 1, dadurch **gekennzeichnet,** daß der Ölspeicher (7) im Ölbehälter (3) angeordnet ist.

9. Hydrolenkungsanlage nach Anspruch 1, dadurch **gekennzeichnet,** daß der Ölspeicher (7) auf den Ölbehälter (3) aufgesetzt ist.

10. Hydrolenkungsanlage nach einem der Ansprüche 1 bis 9, dadurch **gekennzeichnet,** daß in dem Ölspeicher (7) ein Rückschlagventil (15) eingebaut ist.

11. Hydrolenkungsanlage nach Anspruch 10, dadurch **gekennzeichnet,** daß für die Bildung eines Rückschlagventiles (15) der Boden des Kolbens (9) mit einer Öffnung (16) versehen ist, in die ein mit einer Feder (17) belastetes Schließglied (18) drückbar ist.

12. Hydrolenkungsanlage nach Anspruch 9 und 10, dadurch **gekennzeichnet,** daß der Kolben (9) auf seiner oberen Stirnseite mit einer mit der Rücklaufleitung (6) verbundenen Öffnung (16) versehen ist, auf der eine Kugel (19) als Schließglied aufgesetzt ist.

13. Hydrolenkungsanlage nach Anspruch 12, dadurch **gekennzeichnet,** daß die Rücklaufleitung (6) vor der Kugel (19) eine Verengung oder ein Rückhalteglied (20) aufweist.

14. Hydrolenkungsanlage nach Anspruch 13, dadurch **gekennzeichnet,** daß das Rückhalteglied (20) ein quer durch die Rücklaufleitung (6) sich erstreckender Stift ist.

## Claims

1. Hydraulic steering gear having a steering device (2) and an oil tank (3) which are connected to one another by a feed line (5) and a return line (6), wherein a pressure-oil pump (1) is integrated into the feed line (5) and wherein an oil receiver (7) communicating with the return line (6) and a retaining valve (8) opening towards the oil tank (3) are provided and the retaining valve (8) is disposed between the oil tank (3) and the oil receiver (7), characterized in that the oil receiver (7) takes the form of a piston receiver with a piston (9) and with preloading by means of a spring (12).

2. Hydraulic steering gear according to claim 1, characterized in that the retaining valve (8) is integrated into the oil receiver (7).

3. Hydraulic steering gear according to claims 1 and 2, characterized in that openings (11) towards the oil tank (3) arise after a specific stroke of the piston (9) of the oil receiver (7).

4. Hydraulic steering gear according to claim 1, characterized in that the space, in which the preloading spring (12) for the piston (9) is disposed, is provided with a compensating bore (14).

5. Hydraulic steering gear according to claims 1 and 4, characterized in that the space, in which the preloading spring (12) is disposed, is closed off by means of a cover (13), in which the compensating bore (14) is situated.

6. Hydraulic steering gear according to claim 1, characterized in that the oil receiver (7) is integrated directly into the return line (6).

7. Hydraulic steering gear according to claim 1, characterized in that the oil receiver (7) is disposed in the steering device (2).

8. Hydraulic steering gear according to claim 1, characterized in that the oil receiver (7) is disposed in the oil tank (3).

9. Hydraulic steering gear according to claim 1, characterized in that the oil receiver (7) is mounted onto the oil tank (3).

10. Hydraulic steering gear according to one of claims 1 to 9, characterized in that a check valve (15) is installed in the oil receiver (7).

11. Hydraulic steering gear according to claim 10, characterized in that, for forming a check valve (15), the head of the piston (9) is provided with an opening (16), into which a closing element (18) loaded by a spring (17) may be pressed.

12. Hydraulic steering gear according to claims 9 and 10, characterized in that the piston (9) at its upper end face is provided with an opening (16), which is connected to the return line (6) and on which a ball (19) is mounted as a closing element.

13. Hydraulic steering gear according to claim 12, characterized in that the return line (6) in front of the ball (19) has a constriction or a restraining element (20).

14. Hydraulic steering gear according to claim 13, characterized in that the restraining element (20) is a pin extending transversely through the return line (6).

## Revendications

1. Direction hydraulique comportant une direction (2) et un réservoir d'huile (3) qui sont connectés par un conduit d'amenée (5) et un conduit de retour (6), dans laquelle une pompe à huile sous pression (1) est intégrée dans le conduit d'amenée (5), et dans laquelle sont prévus un accumulateur d'huile (7) communiquant avec le conduit de retour (6) et une vanne d'arrêt (8) s'ouvrant dans la direction du réservoir à huile (3), cette vanne d'arrêt (8) étant montée entre le réservoir à huile (3) et l'accumulateur d'huile (7), **caractérisée en ce que** l'accumulateur d'huile (7) est constitué d'un accumulateur à piston comportant un piston (9) et un ressort (12) de précontrainte.

2. Direction hydraulique selon la revendication 1, **caractérisée en ce que** la vanne d'arrêt (8) est intégrée à l'accumulateur d'huile (7).

3. Direction hydraulique selon les revendications 1 et 2, **caractérisée en ce que** des ouvertures (11) en direction du réservoir d'huile (3) se dégagent après une course prédéterminée du piston (9) de l'accumulateur d'huile (7).

4. Direction hydraulique selon la revendication 1, **caractérisée en ce que** la chambre contenant le ressort de précontrainte (12) du piston (9) est pourvu d'alésages de compensation (14).

5. Direction hydraulique selon les revendications 1 et 4, **caractérisée en ce que** la chambre contenant le ressort de précontrainte (12) est fermée par un couvercle (13) dans lequel sont disposées les ouvertures de compensation (14).

6. Direction hydraulique selon la revendication 1, **caractérisée en ce que** l'accumulateur d'huile (7) est directement intégré dans le conduit de retour (6).

7. Direction hydraulique selon la revendication 1, **caractérisée en ce que** l'accumulateur d'huile (7) est intégré dans la direction (2).

8. Direction hydraulique selon la revendication 1, **caractérisée en ce que** l'accumulateur d'huile (7) est monté dans le réservoir d'huile (3).

9. Direction hydraulique selon la revendication 1, **caractérisée en ce que** l'accumulateur d'huile (7) est monté sur le réservoir d'huile (3).

10. Direction hydraulique selon la revendication 1, **caractérisée en ce que** l'accumulateur d'huile (7) contient un clapet anti-retour (15).

11. Direction hydraulique selon la revendication 10, **caractérisée en ce que** pour former le clapet anti-retour (15) le fond du piston (9) est pourvu d'une ouverture (16), dans laquelle peut être engagé un organe de fermeture (18) sollicité par un ressort (17).

12. Direction hydraulique selon les revendications 9 et 10, **caractérisée en ce que** le piston (9) comporte une ouverture (16) ménagée à sa face supérieure et communiquant avec le conduit de retour (6), cette ouverture étant agencée pour coopérer avec une bille (19) constituant un organe de fermeture.

13. Direction hydraulique selon la revendication 12, **caractérisée en ce que** le conduit de retour (6) présente un étranglement ou un organe de retenue (20) avant la bille (19).

14. Direction hydraulique selon la revendication 13, **caractérisée en ce que** l'organe de retenue (20) est constitué par une goupille s'étendent transversalement à travers le conduit de retour (6).
